Europäisches Patentamt

European Patent Office

Office européen des brevets

(19)

(11) Numéro de publication : **0 092 470**
**B1**

# (12) FASCICULE DE BREVET EUROPÉEN

(45) Date de publication du fascicule du brevet :
30.10.85

(21) Numéro de dépôt : 83400734.6

(22) Date de dépôt : 13.04.83

(51) Int. Cl.⁴ : **F 16 D 65/00, F 16 F 7/10**

(54) Dispositif amortisseur pour frein à tambour, plaque support de frein incorporant un tel dispositif et frein à tambour comportant une plaque support équipée d'un tel dispositif.

(30) Priorité : 21.04.82 FR 8206859

(43) Date de publication de la demande :
26.10.83 Bulletin 83/43

(45) Mention de la délivrance du brevet :
30.10.85 Bulletin 85/44

(84) Etats contractants désignés :
BE DE GB IT SE

(56) Documents cités :
DE-A- 2 006 293
FR-A- 2 351 804
GB-A-   577 356

(73) Titulaire : BENDIX France
Centre Paris Pleyel
F-93521 St-Denis Cédex 01 (FR)

(72) Inventeur : Amblard, Patrick
21 Rue d'Aguesseau
F-92100 Boulogne (FR)

(74) Mandataire : Le Moenner, Gabriel et al
SERVICE BREVETS BENDIX 44, Rue François 1er
F-75008 Paris (FR)

Jouve, 18, rue St-Denis, 75001 Paris, France

# Description

L'invention a pour objet un dispositif amortisseur pour un frein à tambour, une plaque support incorporant un tel dispositif et un frein à tambour comportant une plaque support équipée d'un tel dispositif, notamment pour véhicule automobile.

L'invention concerne généralement un frein à tambour comportant deux segments sollicités élastiquement en appui à l'une de leurs extrémités contre un bloc d'ancrage et actionnés à leur autre extrémité par un moteur de frein.

Sur les freins à tambour de ce type, des bruits peuvent apparaître lors du fonctionnement du frein dus aux vibrations engendrées par le frottement des segments sur le tambour tournant. Lors de la conception du frein, si de tels bruits apparaissent, la forme de la plaque support peut être modifiée de manière à lui éviter de rentrer en résonance avec les vibrations engendrées. De façon courante, on ajoute sur la plaque support des nervures obtenues par emboutissage au moment de la fabrication de la plaque support. Les bruits peuvent ainsi être éliminés lors de la conception du frein. Néanmoins, on peut être amené ultérieurement à introduire des modifications, soit sur le frein, soit sur son utilisation, et des bruits peuvent apparaître alors que l'outillage d'emboutissage du plateau est déjà réalisé. Parmi les modifications courantes qui peuvent faire apparaître des bruits nous citerons le remplacement de la garniture de friction ayant servi à la conception du frein par une autre garniture présentant des caractéristiques différentes, l'utilisation de ce frein sur un autre type de véhicule comportant un tambour de raideur différente ; la fixation du frein sur l'essieu peut également être modifiée. Enfin la recherche de réduction de coût peut amener à modifier la matière de la plaque support ou bien son épaisseur. Ces modifications peuvent faire apparaître des bruits dus à des vibrations inexistantes au moment de la conception du frein.

Pour éviter ces inconvénients tout en conservant inchangés les outillages conçus pour le frein de base, l'invention propose un dispositif amortisseur pour frein à tambour comportant deux segments montés sur une plaque support et susceptibles de venir en engagement de friction avec un tambour de frein sous l'action d'un moteur de frein, caractérisé en ce que ledit dispositif comprend au moins une masselotte associée à ladite plaque support au travers d'un élément élastique.

Comme on le verra plus précisément dans la description qui va suivre, l'invention permet d'amortir les vibrations engendrées par la friction des segments sur le tambour et donc de réduire ou d'éliminer les bruits, cette opération pouvant être effectuée, soit par le fabricant du frein au moment de la livraison de celui-ci, soit par un garagiste confronté à ce problème par suite du remplacement des segments après usure des éléments de friction.

On décrira à titre d'exemples non limitatifs deux modes de réalisation de l'invention en se référant aux figures annexées dans lesquelles

la Figure 1 est une vue de face d'un frein à tambour comportant le dispositif amortisseur réalisé conformément à l'invention ;

la Figure 2 est une vue agrandie d'une partie de la plaque support du frein de la Figure 1 ;

la Figure 3 est une vue en coupe suivant la ligne III-III de la Figure 2 montrant le dispositif amortisseur ;

la Figure 4 est une vue de face agrandie d'une partie du dispositif amortisseur avant son montage sur le frein de la Figure 1 ;

la Figure 5 est une vue en coupe suivant la ligne V-V de la Figure 4 ;

la Figure 6 est une vue agrandie de la plaque support du frein de la Figure 1, montrant le deuxième mode de réalisation du dispositif amortisseur ; et

la Figure 7 est une vue en coupe selon la ligne VII-VII de la Figure 6.

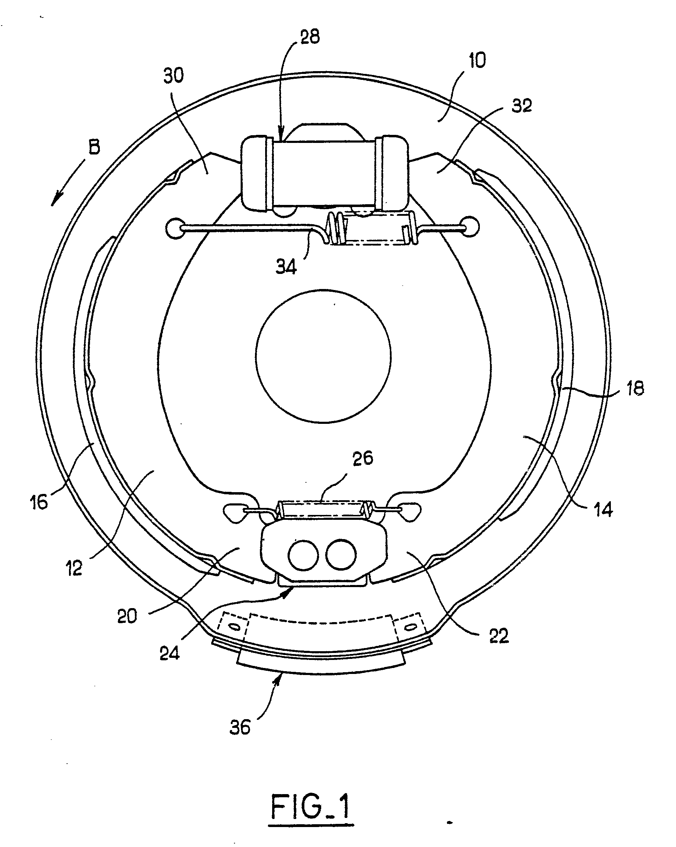

Le frein à tambour représenté sur la Figure 1 comporte une plaque support 10 prévue pour être associée à une partie fixe du véhicule (non représentée). Cette plaque support 10 reçoit deux segments 12 et 14 comportant sur leur périphérie des éléments de friction 16 et 18, respectivement, maintenus sur les segments au moyen de rivets ou équivalents (non représentés). Les extrémités 20 et 22, respectivement des segments 12 et 14, sont maintenues appliquées sur un bloc d'ancrage 24 au moyen d'un ressort 26. Un moteur de frein désigné dans son ensemble par la référence 28 formé, dans le mode de réalisation représenté, par un cylindre de roue hydraulique est placé entre les extrémités 30 et 32, respectivement, des segments 12 et 14. Les extrémités 30 et 32 des segments 12 et 14 sont appliquées sur le moteur de frein 28 au moyen d'un ressort 34.

La plaque support 10 du frein à tambour comporte un dispositif amortisseur désigné dans son ensemble par la référence 36.

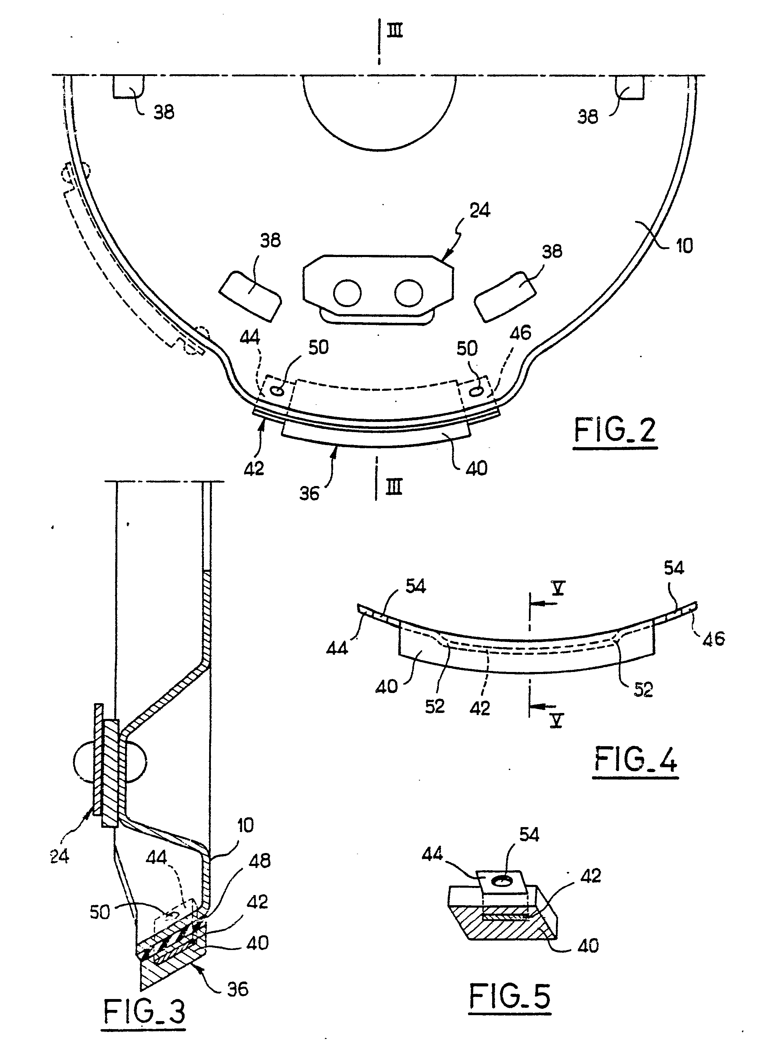

Les Figures 2 et 3 montrent le dispositif amortisseur 36 monté sur la plaque support 10 dépouillée des segments et dont seule la partie inférieure a été représentée pour une compréhension plus facile.

La partie de la plaque support 10 représentée sur la Figure 2 comporte le bloc d'ancrage 24 et des repos de segments 38 formés par emboutissage de la plaque support 10 et sur lesquels les segments 12 et 14 sont susceptibles de coulisser lors de la mise en œuvre du frein.

Le dispositif amortisseur représenté sur les Figures 2 et 3 comporte une masselote 40 formée dans le mode de réalisation représenté par un bloc de plomb. Un élément élastique 42 formé par une lame métallique est noyé dans la masse du bloc 40 et présente deux extrémités 44 et 46 faisant saillie de la masselotte 40.

Comme on le voit plus précisément sur la Figure 3, entre la masselotte 40 et la plaque support 10, est introduit un second élément élastique 48 qui, dans le mode représenté, est une feuille de caoutchouc. L'ensemble masselotte 40, lame élastique 42 et caoutchouc 48 est fixé à la plaque support 10 au moyen de deux rivets 50 passant à travers les orifices formés dans la plaque support 10 et dans la lame élastique 42. En se reportant aux Figures 4 et 5 où l'ensemble masselotte 40 et lame élastique 42 sont représentés avant montage sur la plaque support 10, on voit que la lame 42 comporte une pliure 52 de manière à pouvoir être entourée de plomb dans sa partie centrale et de tenir la masselotte 40 dans toutes les directions. Sur les Figures 4 et 5, on voit également les perçages 54 destinés au passage des rivets 50. Comme on le voit sur les Figures 2 à 5, la masselotte 40 et la lame élastique 42 ont un profil qui correspond à la forme de la plaque support 10 dans la zone de fixation du dispositif amortisseur 36 sur cette plaque support 10.

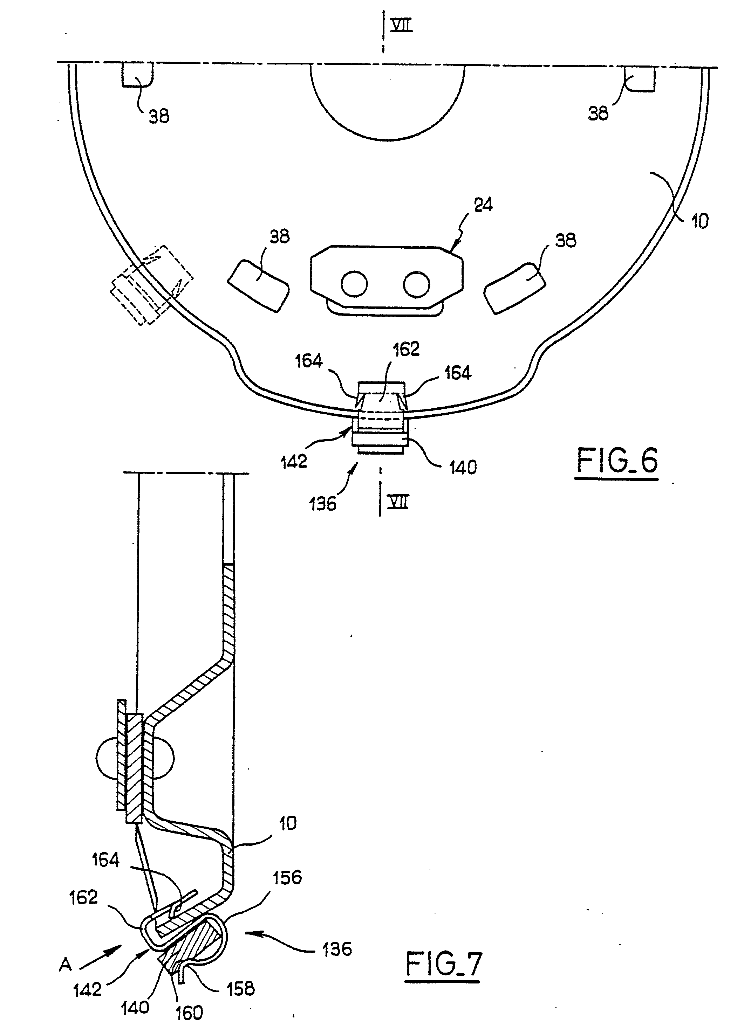

Les Figures 6 et 7 représentent un deuxième mode de réalisation du dispositif amortisseur. De même que pour la Figure 2, la Figure 6 représente la partie inférieure de la plaque support 10 dépouillée des segments 12 et 14. On retrouve le bloc d'ancrage 24 et les repos de segments 38. Dans ce deuxième mode de réalisation du dispositif amortisseur, les éléments remplissant des fonctions similaires auront les mêmes références augmentées de 100.

Le dispositif amortisseur 136 comporte une masselotte 140 tenue par un élément élastique 142 formé par une lame métallique pliée en forme de S. La lame métallique 142 présente une première portion en U 156 qui tient élastiquement la masselotte 140 grâce à un pli 158 formé dans un des bras du U et une creusure 160 formée dans la masselotte 140. La lame métallique 142 présente une deuxième portion en U 162 qui associe élastiquement l'ensemble masselotte 140 et lame 142 à la plaque support 10. La portion en U 162 comporte deux languettes 164 obtenues par découpe de la portion 162 de manière à être appliquées élastiquement sur la plaque support 10 et ancrer l'ensemble masselotte 140 et lame élastique 142 sur la plaque support 10.

Dans les deux modes de réalisation représentés, les dispositifs amortisseurs 36 et 136 sont fixés à la plaque support 10 dans une région périphérique de ladite plaque 10.

Dans la description qui précède un seul dispositif amortisseur a été représenté. Il est bien évident que les dispositifs amortisseurs peuvent être placés à un autre endroit de la plaque support 10 ou bien plusieurs dispositifs amortisseurs peuvent être mis sur une même plaque comme indiqué en pointillé sur les Figures 2 et 6.

Le montage des dispositifs amortisseurs se fait de la façon suivante : dans les deux modes de réalisation représentés, ce montage peut être effectué, soit lorsque la plaque support n'est pas équipée de segments, soit sur un frein complet tel que représenté sur la Figure 1. En se reportant aux Figures 2 et 3, des orifices sont préalablement percés dans la plaque support 10 pour recevoir des rivets. On met en place la masselotte 40 avec la lame élastique 42 en interposant l'élément élastique 48 qui dans le mode représenté est une feuille de caoutchouc. On met en place les rivets 50 qui peuvent être des rivets type aveugle ou tout autre système à vis-écrou par exemple. Si la plaque support n'est pas équipée de segments, on procède alors au montage du frein de façon conventionnelle. En se reportant aux Figures 6 et 7, le montage de ce deuxième mode de réalisation du dispositif 136 se fait de la façon suivante : la lame élastique en S 142 est préalablement équipée de la masselotte 140 ; on procède alors au montage de l'ensemble masselotte 140 et lame 142 sur la plaque support 10. Pour cela, on présente l'extrémité ouverte de la portion en U 162 devant la partie périphérique de la plaque support 10 et par poussée dans la direction de la flèche A de la Figure 7, on fait passer les deux branches du U 162 de part et d'autre du bord périphérique de la plaque support. Les languettes 164 sont fléchies élastiquement lors de cette introduction et s'arqueboutent sur la plaque support de manière à empêcher l'échappement de la portion en U 162 en éloignement de la plaque support 10.

On a constaté expérimentalement que les dispositifs décrits ci-dessus suppriment ou atténuent les bruits engendrés par la vibration due au frottement des segments sur le tambour. En cas d'atténuation seulement, il suffit d'augmenter le poids de la masselotte pour obtenir un frein silencieux. L'expérience a également montré qu'une fixation rigide de la masselotte sur le plateau n'atténue pas le bruit engendré par les vibrations. De même, on a constaté que le plomb et ses alliages doivent être préférés à l'acier pour la réalisation des masselottes. Les zones d'efficacité maximale d'amortissement sont de préférence sur la périphérie et, soit dans la partie basse du frein tel que représenté sur la Figure 1, soit sur la partie haute du frein ou bien encore à proximité du segment comprimé, c'est-à-dire, en se référant à la Figure 1, à proximité du segment 12 si le sens de rotation de la roue est celui indiqué par la flèche B de la Figure 1.

On comprendra que l'invention n'est pas limitée aux deux modes de réalisation décrits, le nombre et la position des dispositifs amortisseurs pouvant être modifiés sans sortir du cadre de l'invention.

En particulier, un mode de réalisation non représenté et également efficace consiste en un collage de la masselotte sur la plaque support par l'intermédiaire d'un matériau élastique type mousse en matériau plastique.

De la description qui précède, on comprend que les dispositifs amortisseurs peuvent être mis en place aussi bien lors de la fabrication du frein que par un garagiste lors du remplacement des garnitures de friction après usure de celles-ci, la zone périphérique étant de plus d'un accès plus facile pour une intervention corrective ultérieure lors de la maintenance du véhicule par exemple.

## Revendications

1. Dispositif amortisseur (36, 136) pour frein à tambour comportant deux segments (12, 14) montés sur une plaque support (10) et susceptibles de venir en engagement de friction avec un tambour de frein sous l'action d'un moteur de frein (28), caractérisé en ce que ledit dispositif (36, 136) comprend au moins une masselotte (40, 140) associée à ladite plaque support (10) au travers d'un élément élastique (42, 142).

2. Dispositif amortisseur (36, 136) selon la revendication 1, caractérisé en ce que ladite masselotte (40, 140) est associée à ladite plaque support (10) en une zone où l'amplitude de vibration est maximale lors du fonctionnement du frein.

3. Dispositif amortisseur (36, 136) selon la revendication 2, caractérisé en ce que ladite masselotte (40, 140) est associée à une zone périphérique de ladite plaque support (10).

4. Dispositif amortisseur (36) selon la revendication 2 ou 3, caractérisé en ce qu'il comprend une lame élastique (42) passant au travers de ladite masselotte (40) et dont deux extrémités (44, 46) faisant saillie de part et d'autre de ladite masselotte (40) sont fixées à ladite plaque support (10) au moyen de rivets ou équivalents (50).

5. Dispositif amortisseur (36) selon la revendication 4, caractérisé en ce qu'un second élément élastique (48) est placé entre ladite masselotte (40) et ladite plaque support (10).

6. Dispositif amortisseur (136) selon la revendication 2 ou 3, caractérisé en ce que ledit élément élastique (142) comporte deux portions en U, une première (156) de ces portions tient élastiquement ladite masselotte (140), une seconde de ces portions (162) associe ledit élément élastique (142) à ladite plaque support (10).

7. Dispositif amortisseur (136) selon la revendication 6, caractérisé en ce que ledit élément élastique (142) est formé par une lame métallique pliée en forme de S pour former les deux portions en U (156, 162).

8. Dispositif amortisseur (136) selon la revendication 7, caractérisé en ce que la seconde portion en U (162) de la lame élastique (142) en forme de S comporte deux languettes (164) assurant l'ancrage de ladite lame élastique (142) sur ladite plaque support (10).

9. Plaque support (10) pour frein à tambour, caractérisé en ce qu'elle comporte un dispositif amortisseur (36, 136) selon l'une des revendications précédentes.

10. Frein à tambour comportant deux segments (12, 14) susceptibles de venir en engagement de friction avec un tambour tournant, caractérisé en ce que lesdits deux segments (12, 14) sont montés sur une plaque support (10) selon la revendication 9.

## Claims

1. Damping device (36, 136) for a drum brake comprising a pair of segments (12, 14) mounted on a support plate (10) and adapted to be moved into frictional engagement with a brake drum under the action of a brake motor (28), characterized in that said device (36, 136) comprises at least one mass member (40, 140) associated with said support plate (10) via a resilient element (42, 142).

2. Damping device (36, 136) according to claim 1, characterized in that said mass member (40, 140) is associated with said support plate (10) in a zone where the amplitude of vibration is maximal during operation of the brake.

3. Damping device (36, 136) according to claim 2, characterized in that said mass member (40, 140) is associated with a peripheral zone of said support plate (10).

4. Damping device (36) according to claim 2 or claim 3, characterized in that it comprises a leaf spring (42) passing through said mass member (40) and having two extremities (44, 46) projecting from opposite sides of said mass member (40) and fixed to said support plate (10) by means of rivets or equivalent means (50).

5. Damping device (36) according to claim 4, characterized in that a second resilient element (48) is disposed between said mass member (40) and said support plate (10).

6. Damping device (136) according to claim 2 or claim 3, characterized in that said resilient element (142) comprises two U-portions, a first one (156) of said portions resiliently retaining said mass member (140) and a second one of said portions (162) associating said resilient element (142) to said support plate (10).

7. Damping device (136) according to claim 6, characterized in that said resilient element (142) is formed by a metallic leaf bent into S-shape for forming said two U-portions (156, 162).

8. Damping device (136) according to claim 7, characterized in that the second U-portion (162) of the S-shaped resilient leaf (142) comprises a pair of tongues (164) ensuring the anchorage of said resilient leaf (142) on said support plate (10).

9. Support plate (10) for a drum brake, characterized in that it comprises a damping device (36, 136) according to any of the preceding claims.

10. Drum brake comprising a pair of segments (12, 14) adapted to be moved into frictional engagement with a rotating drum, characterized in that said pair of segments (12, 14) is mounted on a support plate (10) according to claim 9.

## Patentansprüche

1. Dämpfungsvorrichtung (36, 136) für eine Trommelbremse mit zwei Bremsbacken (12, 14), die an einem Bremsschild (10) angebrancht und unter der Wirkung eines Bremsmotors (28) in Reibanlage mit einer Bremstrommel bewegbar sind, dadurch gekennzeichnet, daß die Dämpfungsvorrichtung (36, 136) mindestens einen Massekörper (40, 140) aufweist, der dem Bremsschild (10) über eine elastisches Element (42, 142) zugeordnet ist.

2. Dämpfungsvorrichtung (36, 136) nach Anspruch 1, dadurch gekennzeichnet, daß der Massekörper (40, 140) dem Bremsschild (10) in einem Bereich zugeordnet ist, in dem die Schwingungsamplitude bei Betrieb der Bremse maximal ist.

3. Dämpfungsvorrichtung (36, 136) nach Anspruch 2, dadurch gekennzeichnet, daß der Massekörper (40, 140) einem Umfangsbereich des Bremsschildes (10) zugeordnet ist.

4. Dämpfungsvorrichtung (36) nach Anspruch 2 oder 3, dadurch gekennzeichnet, daß sie eine Blattfeder (42) aufweist, die durch den Massekörper (40) hindurchverläuft und deren beidseitig über den Massekörper (40) vorstehenden beiden Enden (44, 46) an dem Bremsschild (10) mittels Nieten (50) oder entsprechender Befestigungsmittel befestigt sind.

5. Dämpfungsvorrichtung (36) nach Anspruch 4, dadurch gekennzeichnet, daß ein zweites elastisches Element (48) zwischen dem Massekörper (40) und dem Bremsschild (10) angeordnet ist.

6. Dämpfungsvorrichtung (136) nach Anspruch 2 oder 3, dadurch gekennzeichnet, daß das besagte elastische Element (142) zwei Abschnitte in U-Form aufweist, von denen ein erster Abschnitt (156) den Massekörper (140) elastisch hält und ein zweiter Abschnitt (162) das besagte elastische Element (142) dem Bremsschild (10) zuordnet.

7. Dämpfungsvorrichtung (136) nach Anspruch 6, dadurch gekennzeichnet, daß das elastische Element (142) von einem Metallblatt gebildet wird, das zur Bildung der beiden U-förmigen Abschnitte (156, 162) in Form eines S gebogen ist.

8. Dämpfungsvorrichtung (136) nach Anspruch 7, dadurch gekennzeichnet, daß der zweite U-förmige Abschnitt (162) des S-förmig gebogenen Metallblatts (142) zwei Zungen (164) aufweist, die die Verankerung des Metallblatts (142) am Bremsschild (10) sicherstellen.

9. Bremsschild (10) für eine Scheibenbremse, dadurch gekennzeichnet, daß er eine Dämpfungsvorrichtung (36, 136) nach einem der vorhergehenden Ansprüche trägt.

10. Schreibenbremse mit zwei Bremsbacken (12, 14), die in Reibanlage mit einer umlaufenden Bremstrommel bewegbar sind, dadurch gekennzeichnet, daß die beiden Bremsbacken (12, 14) an einem Bremsschild (10) nach Anspruch 9 gelagert sind.

## FIG_1

_FIG. 2_

_FIG. 3_

_FIG. 4_

_FIG. 5_

FIG. 6

FIG. 7

3